# FASCICULE DE BREVET EUROPEEN

(11) **EP 2 040 069 B1**
(45) Date de publication et mention de la délivrance du brevet: **11.11.2015**
(21) Numéro de dépôt: 08164592.1
(22) Date de dépôt: 18.09.2008
(51) Int. Cl.: G01N 27/90

(54) **Dispositif de contrôle des alvéoles tangentielles d'un disque de rotor.**
Vorrichtung zur Kontrolle der tangentialen Alveolen einer Rotorscheibe
Device for inspecting the tangential recesses of a rotor disc

(30) Priorité: 19.09.2007 FR 0757669
(43) Date de publication de la demande: 25.03.2009
(73) Titulaire: SNECMA, 75015 Paris (FR)
(72) Inventeur: BRIFFA, Patrick, 77370, FONTENAILLES (FR); CABANIS, Patrick, 77390, OZOUER LE VOULGIS (FR); LE FLOC'H, René, 77250, MORET SUR LOING (FR); MARCEAU, Christian, Armand, 77127, LIEUSAINT (FR); THIBAULT, Dominique, 77176, NANDY (FR); PASQUER, Vincent, 91470, FORGES LES BAINS (FR)
(74) Mandataire: Intès, Didier Gérard André

(56) Documents cités:
- EP-A- 1 416 122
- US-A- 4 970 890
- US-A- 5 442 286
- US-B1- 6 608 478
- US-B1- 6 952 094

## Description

L'invention se rapporte à un dispositif de contrôle des alvéoles tangentielles d'un disque de rotor de turbomachine, par courants de Foucault. Elle concerne plus particulièrement un perfectionnement permettant notamment un positionnement rapide et rigoureux des moyens de contrôle, une acquisition rapide des données et des mesures plus fiables et plus précises. Le dispositif est plus particulièrement adapté pour le contrôle des surfaces de pression desdites alvéoles tangentielles.

On connaît une sonde à courants de Foucault dite multi-éléments, associée à un système d'imagerie, spécialement conformés pour coulisser le long d'une alvéole tangentielle d'un disque de rotor. La sonde, rectiligne, est de section constante ; elle a un contour transversal correspondant à la section de l'alvéole à contrôler. Elle renferme une pluralité de capteurs à courants de Foucault, agencés pour l'acquisition quasi-simultanée de plusieurs séries de données au cours d'une course de balayage suivant le sens longitudinal de l'alvéole. Chaque série de données correspond à la scrutation d'une bande longitudinale de la surface interne de l'alvéole par un même capteur. La sonde est déplacée manuellement.

US 6,608,478 décrit un dispositif de contrôle par courants de Foucault des alvéoles d'un disque de rotor, le dispositif comportant un support comprenant des organes de positionnement coopérant respectivement avec des alvéoles voisines d'une alvéole à contrôler.

US 5,442,286 décrit un équipement similaire à celui défini ci-dessus.

La fiabilité et la précision des mesures dépendent du bon positionnement de la sonde dans l'alvéole. C'est pourquoi les capteurs sont regroupés dans un tronçon central de la sonde, entre deux tronçons de guidage qui en sont dépourvus. De cette façon, la sonde est bien positionnée, même aux extrémités de l'alvéole lorsque les capteurs commencent à scruter l'état de surface de celle-ci.

Bien que l'association d'une telle sonde multiéléments avec un système d'imagerie soit avantageuse, les performances du système sont limitées par la présence des tronçons de guidage, c'est-à-dire par l'impossibilité de disposer des capteurs aux extrémités de la sonde. De ce fait, le contrôle n'est vraiment fiable que si on peut faire coulisser le tronçon central de la sonde sur la totalité de la longueur de l'alvéole. C'est possible sur un disque entièrement démonté où la sonde peut être introduite par une extrémité de l'alvéole et extraite par l'autre. Cependant, si on doit contrôler un rotor composé de plusieurs disques accolés (soudés) les uns aux autres, ce déplacement n'est pas toujours possible.

L'invention permet d'améliorer les conditions de mise en oeuvre d'une sonde multiéléments pour le contrôle des alvéoles tangentielles d'un disque de rotor, notamment pour le contrôle des faces de pression de ces alvéoles.

Plus précisément, l'invention concerne un dispositif de contrôle par courants de Foucault des alvéoles tangentielles d'un disque de rotor, du type comprenant une sonde dont le contour transversal correspond à celui de la section d'une telle alvéole, ladite sonde renfermant une pluralité de capteurs agencés pour l'acquisition de plusieurs séries de données au cours d'une course de balayage suivant le sens longitudinal de l'alvéole, caractérisé en ce qu'il comporte un support comprenant deux organes de positionnement coopérant respectivement avec des alvéoles voisines d'une alvéole à contrôler et un équipage mobile coulissant portant ladite sonde, agencés pour la guider le long de ladite alvéole pendant le contrôle.

Avec l'agencement défini ci-dessus, le positionnement de la sonde est précis dès le début de sa course à l'intérieur de l'alvéole et les mesures sont donc plus fiables et plus précises. La progression de la sonde le long de l'alvéole peut être plus facilement maîtrisée, même manuellement. En outre, selon une autre caractéristique avantageuse, les capteurs peuvent être répartis sur une plus grande longueur de la sonde, voire sur sensiblement toute sa longueur, y compris au voisinage de ses extrémités. Autrement dit, les tronçons de guidage mentionnés ci-dessus peuvent être supprimés ce qui permet de mieux explorer les alvéoles sur toute leur longueur, même si le disque est accolé à un autre disque.

Selon une autre caractéristique avantageuse, la sonde est constituée de deux patins mobiles. Les capteurs sont répartis dans les patins. Ces derniers sont montés articulés avec sollicitation élastique vers l'extérieur (en éloignement l'un de l'autre) pour garantir le contact desdits patins avec des zones correspondantes de l'alvéole à contrôler. Ces zones incluent notamment les surfaces de pression mentionnées ci-dessus.

En outre, des moyens d'indexation peuvent être prévus pour contrôler la position et/ou la progression de la sonde dans l'alvéole à contrôler.

Selon un mode de réalisation possible, les deux organes de positionnement comportent deux éléments expansibles distants l'un de l'autre d'une distance correspondant à celle qui sépare lesdites alvéoles voisines. Ces éléments sont conformés et agencés pour être engagés et immobilisés dans lesdites alvéoles voisines, ce qui permet de positionner le support en sorte que ladite sonde puisse être engagée dans ladite alvéole à contrôler.

Avantageusement, le dispositif est complété par un générateur-récepteur, multivoies. Un tel générateur-récepteur permet d'activer tous les capteurs simultanément à différentes positions de la sonde dans ladite alvéole à contrôler. En phase de réception, il permet la synchronisation des acquisitions.

L'invention sera mieux comprise et d'autres avantages de celle-ci apparaîtront plus clairement à la lumière de la description qui va suivre d'un dispositif de contrôle par courants de Foucault conforme à son principe, donnée uniquement à titre d'exemple et faite en référence aux dessins annexés, dans lesquels :

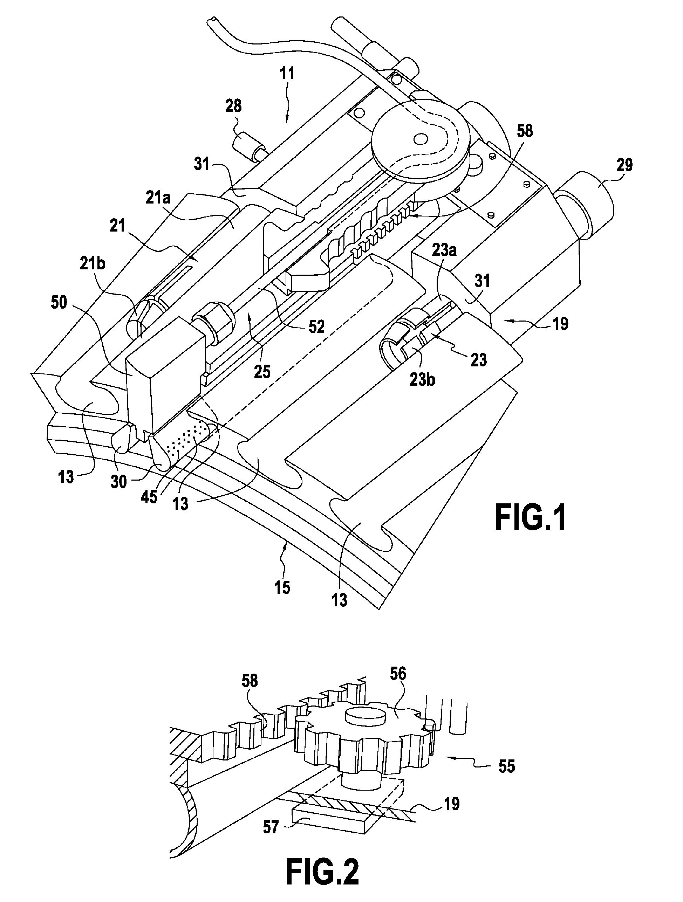

- la figure 1 est une vue générale en perspective du dispositif de contrôle selon l'invention, installé à la périphérie d'un disque de rotor pour le contrôle par courants de Foucault de l'une de ses alvéoles ;
- la figure 2 est une vue de détail illustrant les moyens d'indexation ; et

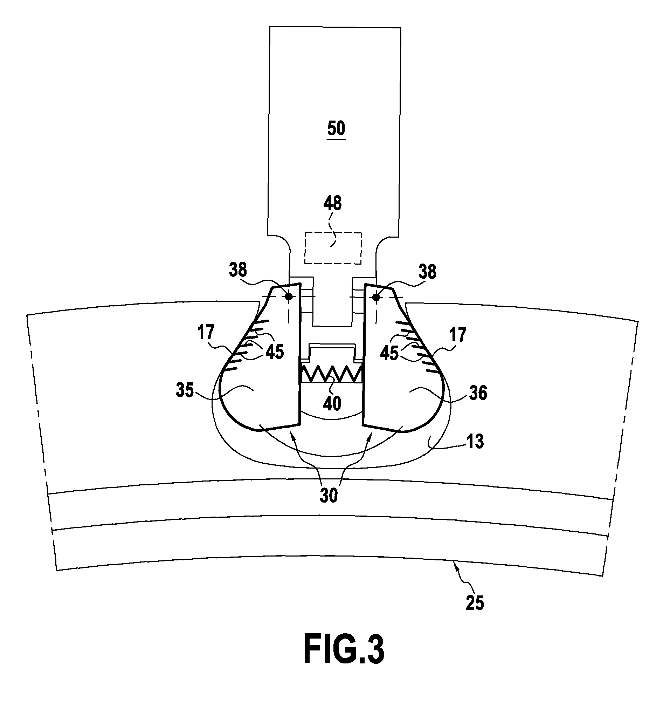

- la figure 3 est une autre vue de détail illustrant la structure de la sonde.

En se reportant aux dessins, on a représenté un dispositif de contrôle par courants de Foucault 11, apte à détecter les défauts de surface (ou faiblement sous-jacents) des alvéoles tangentielles 13 définies à la périphérie d'un disque de rotor 15. On sait que ces alvéoles retiennent des pieds d'aubes. Une telle alvéole 13 comporte notamment deux surfaces dites "surface de pression" 17 contre lesquelles le pied d'aube prend fortement appui, sous l'effet de la force centrifuge. Le contrôle de l'état de ces surfaces de pression est particulièrement important, spécialement pendant les vérifications systématiques de maintenance. On peut ainsi mettre en évidence la formation de criques de fatigue dans ces surfaces de pression.

Le dispositif comporte un support 19 comprenant deux organes de positionnement 21, 23 susceptibles de coopérer respectivement avec des alvéoles voisines de l'alvéole à contrôler. Ces organes de positionnement sont formés par des tiges 21a, 23a parallèles comportant chacune un élément expansible 21b, 23b annulaire. Ces tiges munies d'éléments expansibles sont espacées d'une distance correspondant à celle qui sépare des alvéoles voisines de l'alvéole à contrôler, plus particulièrement ici les deux alvéoles les plus proches situées de part et d'autre de celle-ci. Le support 19, en forme générale de cavalier, porte un équipage mobile 25 coulissant sur lequel est montée une sonde à courants de Foucault 30 du type multiéléments. L'équipage mobile coulisse le long d'une glissière définie dans le support. L'ensemble est agencé pour que la sonde 30 puisse s'engager dans l'alvéole tangentielle à contrôler lorsque les deux tiges 21a, 23a sont engagées dans les deux alvéoles voisines et immobilisées dans celles-ci, grâce aux éléments expansibles 21b, 23b. On distingue une tige fixe 21a destinée à être engagée en premier dans une alvéole voisine et une tige mobile 23b, coulissant dans le support 19, que l'on peut introduire ensuite dans l'autre alvéole voisine.

L'élément expansible 21b de la tige fixe est commandé par un levier latéral 28 tandis que l'élément expansible 23b de la tige mobile est commandé par une molette 29 située à l'extrémité arrière de celle-ci.

Le support 19 comporte deux surfaces de butée 31. Les tiges 21a, 23a font respectivement saillie de ces surfaces.

Lorsque les deux tiges sont immobilisées dans les deux alvéoles voisines, de part et d'autre de l'alvéole à contrôler, le support est positionné de telle sorte que les surfaces de butée 31 soient en appui contre un côté du disque 15 et que l'équipage mobile et la sonde soient exactement en regard d'une extrémité de l'alvéole à contrôler pour que ladite sonde puisse s'y engager.

La sonde 30 pourrait être constituée d'un unique bloc de matière plastique renfermant les capteurs. Ce bloc aurait un contour transversal reproduisant au moins en partie celui de la section d'une alvéole 13. Dans l'exemple décrit, cependant, la sonde 30 comporte deux patins 35, 36, symétriques, montés articulés par des axes de pivotement 38 parallèles, avec sollicitation élastique vers l'extérieur, c'est-à-dire en éloignement l'un de l'autre, au moyen d'un ressort 40. Cet agencement garantit le contact des patins sur des zones correspondantes de l'alvéole à contrôler, plus précisément ici lesdites surfaces de pression 17. Ce type de montage implique de rapprocher les patins l'un vers l'autre au moment de l'introduction de la sonde dans l'alvéole.

Des capteurs 45 à courants de Foucault sont disposés sur plusieurs lignes à l'intérieur de chaque patin 35, 36 pour obtenir un recouvrement lors du déplacement de la sonde le long de l'alvéole tangentielle. Les capteurs peuvent être répartis sur sensiblement toute la longueur de la sonde, y compris ses extrémités. En particulier, il est avantageux que plusieurs capteurs 45 soient disposés à l'avant de la sonde 30 (en considérant son sens de déplacement). De préférence, on peut disposer le plus grand nombre de capteurs possibles à l'avant de chaque patin 35 pour permettre de scruter l'extrémité de l'alvéole tangentielle même si celle-ci n'est pas débouchante.

Les fils des capteurs sont connectés à un générateur-récepteur 48 multivoies, multiplexé, qui permet la sollicitation simultanée de tous les capteurs à l'émission et la synchronisation des acquisitions, à la réception. Ce générateur-récepteur est mis en oeuvre à différentes positions de la sonde dans ladite alvéole à contrôler. Un tel générateur-récepteur 48 peut être installé dans le socle 50 (faisant partie de l'équipage mobile) auquel les patins sont articulés. Un câble électrique 52 pour le transfert des signaux, relie ce générateur-récepteur à un dispositif d'imagerie (non représenté) comportant un logiciel de reconstruction et de traitement d'image permettant de construire une acquisition lisible grâce à une restitution en format dit "C-SCAN".

Pour améliorer la restitution de l'image, le dispositif est aussi équipé de moyens d'indexation 55 pour contrôler la position et/ou la progression de la sonde 30 dans l'alvéole à contrôler. Par exemple, une roue dentée 56 est montée sur le support 19. Son axe est lié à un générateur d'impulsions 57 ou analogue. La roue dentée est en prise avec une crémaillère 58, rectiligne, portée par l'équipage mobile coulissant 25.

Ainsi, l'acquisition de données est relativement indépendante de l'opérateur, notamment de la vitesse avec laquelle il déplace l'équipage mobile portant la sonde. L'équipage mobile pourrait être motorisé pour une exploration à vitesse constante prédéterminée.

## Revendications

1. Dispositif de contrôle par courants de Foucault des alvéoles tangentielles (13) d'un disque de rotor, du type comprenant une sonde (30) dont le contour transversal correspond à celui de la section d'une telle alvéole, ladite sonde renfermant une pluralité de capteurs (45) agencés pour l'acquisition de plusieurs séries de données au cours d'une course de balayage suivant le sens longitudinal de l'alvéole, **caractérisé en ce que** le dispositif comporte un support (19) comprenant deux organes de positionnement (21, 23) coopérant respectivement avec des alvéoles voisines d'une alvéole à contrôler et un équipage mobile (25) coulissant portant ladite sonde, agencé pour la guider le long de ladite alvéole pendant le contrôle.

2. Dispositif de contrôle selon la revendication 1, **caractérisé en ce que** les deux organes de positionnement comportent deux éléments expansibles (21b, 23b) distants d'une distance correspondant à celle qui sépare lesdites alvéoles voisines, lesdits éléments étant agencés pour être engagés et immobilisés dans celles-ci pour positionner ledit support de sorte que ladite sonde puisse être engagée dans ladite alvéole tangentielle à contrôler.

3. Dispositif selon la revendication 1 ou 2, **caractérisé en ce qu'**il comporte des moyens d'indexation (55) pour contrôler la position et/ou la progression de la sonde (30) dans ladite alvéole à contrôler.

4. Dispositif selon l'une des revendications précédentes, **caractérisé en ce que** lesdits capteurs (45) sont répartis dans des patins (35) de la sonde (30), montés articulés avec sollicitation élastique vers l'extérieur, pour garantir le contact desdits patins sur des zones correspondantes de ladite alvéole à contrôler.

5. Dispositif selon l'une des revendications précédentes, **caractérisé en ce qu'**il comporte un générateur-récepteur multivoies (48) pour activer tous les capteurs sensiblement simultanément à différentes positions de la sonde dans ladite alvéole à contrôler.

6. Dispositif selon l'une des revendications précédentes, **caractérisé en ce que** des capteurs (45) sont disposés à l'avant de la sonde (30).

## Patentansprüche

1. Vorrichtung zur Wirbelstromprüfung der tangentialen Zellen (13) einer Rotorscheibe, vom Typ umfassend eine Sonde (30), deren Querkontur derjenigen des Querschnitts einer solchen Zelle entspricht, wobei die Sonde eine Vielzahl von Sensoren (45) enthält, die für die Erfassung mehrerer Datenreihen im Verlauf eines Abtastlaufs entlang der Längsrichtung der Zelle eingerichtet sind, **dadurch gekennzeichnet, dass** die Vorrichtung einen Halter (19) umfasst, der zwei Positionierungsorgane (21, 23), die jeweils mit benachbarten Zellen einer zu prüfenden Zelle zusammenwirken, sowie ein die Sonde tragendes verschiebbares bewegliches Organ (25), das dazu eingerichtet ist, sie während der Prüfung entlang der Zelle zu führen, umfasst.

2. Prüfvorrichtung nach Anspruch 1, **dadurch gekennzeichnet, dass** die beiden Positionierungsorgane zwei Spreizelemente (21 b, 23b) umfassen, die um einen Abstand, welcher demjenigen entspricht, der die benachbarten Zellen trennt, entfernt sind, wobei die Elemente dazu eingerichtet sind, in diese eingesteckt und darin festgelegt zu werden, um den Halter zu positionieren, so dass die Sonde in die zu prüfende tangentiale Zelle eingesteckt werden kann.

3. Vorrichtung nach Anspruch 1 oder 2, **dadurch gekennzeichnet, dass** sie Indexiermittel (55) umfasst, um die Position und/oder den Fortschritt der Sonde (30) in der zu prüfenden Zelle zu kontrollieren.

4. Vorrichtung nach einem der vorhergehenden Ansprüche, **dadurch gekennzeichnet, dass** die Sensoren (45) in Schuhen (35) der Sonde (30) verteilt sind, die mit elastischer Auswärtsbeanspruchung gelenkig angebracht sind, um den Kontakt der Schuhe an entsprechenden Bereichen der zu prüfenden Zelle zu gewährleisten.

5. Vorrichtung nach einem der vorhergehenden Ansprüche, **dadurch gekennzeichnet, dass** sie einen Mehrwege-Generator/Empfänger (48) umfasst, um alle Sensoren im Wesentlichen gleichzeitig an unterschiedlichen Positionen der Sonde in der zu prüfenden Zelle zu aktivieren.

6. Vorrichtung nach einem der vorhergehenden Ansprüche, **dadurch gekennzeichnet, dass** Sensoren (45) an der Vorderseite der Sonde (30) angeordnet sind.

## Claims

1. An inspection device for inspecting tangential recesses (13) in a rotor disk by means of eddy currents, the device being of the type comprising a probe (30) of cross-section with an outline that matches the outline of the section of such a recess, said probe containing a plurality of sensors (45) arranged for acquiring a plurality of data series during a scan stroke in the longitudinal direction of the recess, the device being **characterized in that** the device comprises a support (19) having two positioning members (21, 23) that co-operate respectively with two recesses neighboring the recess for inspection, and sliding moving equipment (25) carrying said probe and arranged to guide it along said recess during inspection.

2. An inspection device according to claim 1, **characterized in that** the two positioning members include two expandable elements (21b, 23b) spaced apart by a distance corresponding to the distance between said neighboring recesses, said elements being arranged to be engaged and locked therein to position said support in such a manner that said probe can be engaged in said tangential recess for inspection.

3. A device according to claim 1 or 2, **characterized in that** it includes indexing means (55) for monitoring the position and/or the progress of the probe (30) in said recess for inspection.

4. A device according to any preceding claim, **characterized in that** said sensors (45) are distributed in blocks (35) of the probe (30), the blocks being hinge-mounted with outwardly-directed resilient bias so as to guarantee that said blocks make contact against the corresponding zones of said recess for inspection.

5. A device according to any preceding claim, **characterized in that** it includes a multi-channel generator-receiver (48) for activating all of the sensors substantially simultaneously at different positions along the probe in said recess for inspection.

6. A device according to any preceding claim, **characterized in that** the sensors (45) are disposed at the leading end of the probe (30).
